# EUROPEAN PATENT APPLICATION

(11) **EP 4 071 608 A1**
(43) Date of publication of application: **12.10.2022**
(21) Application number: 22166804.9
(22) Date of filing: 05.04.2022
(51) Int. Cl.: G06F 9/451, G06F 9/455, B60K 35/00, G06V 10/10, G09G 5/14

(54) **SIGNAL PROCESSING DEVICE AND VEHICLE DISPLAY APPARATUS INCLUDING THE SAME**

(30) Priority: 08.04.2021 KR 20210045782; 10.03.2022 KR 20220030338
(71) Applicant: LG Electronics Inc., SEOUL 07336 (KR)
(72) Inventor: JANG, Jaeyoung, 08592 Seoul (KR); ROH, Youngsu, 08592 Seoul (KR)
(74) Representative: Mooser, Sebastian Thomas

(57) **Abstract**

The present disclosure relates to a signal processing device and a vehicle display apparatus including the same. The vehicle display apparatus according to an embodiment of the present disclosure includes: a display located in a vehicle; and a signal processing device configured to output an image signal to the display, wherein while outputting a first overlay based on a first operating system, the signal processing device is configured to display a second overlay based on a second operating system to be overlapped on at least a partial area of the first overlay, thereby seamlessly displaying the overlays based on heterogeneous operating systems.

## Description

### CROSS-REFERENCE TO RELATED APPLICATION

This application claims the priority benefit of Korean Patent Application Nos. 10-2021-0045782, filed on, 8 April 2021 and 10-2022-0030338, filed on, 10 March 2022 in the Korean Intellectual Property Office, the disclosure of which is incorporated herein by reference.

### BACKGROUND OF THE DISCLOSURE

### 1. Field of the disclosure

The present disclosure relates to a signal processing device and a vehicle display apparatus including the same, and more particularly to a signal processing device capable of simultaneously displaying overlays based on heterogeneous operating systems, and a vehicle display apparatus including the same.

### 2. Description of the Related Art

A vehicle is an apparatus that a driver moves in a desired direction. A representative example of the vehicle is a car.

Meanwhile, a display apparatus for vehicles is located in the vehicle for convenience of users who use the vehicle.

For example, a display, such as a cluster display, Audio Video Navigation (AVN) display etc., are located in the vehicle to display various types of information including vehicle driving information, map information, and the like.

Further, in order to display a variety of information on the vehicle display apparatus, an operating system may be executed in the signal processing device, and overlays corresponding to information may be generated using applications executing on the operating system and the generated overlays may be provided to the cluster display or the AVN display.

Recent development trends show that there is a case where while an overlay is generated and displayed based on a first operating system, it is required to execute a second operating system, different from the first operating system, in order to execute a new application and the like.

In this regard, U.S. Patent No. US10019274 (hereinafter referred to as a "related art") discloses a method of displaying menus based on a host operating system between the host and guest operating systems.

However, the related art has a drawback in that while a first overlay based on the host operating system is displayed, a second overlay based on the guest operating system is displayed by screen switching to replace the first overlay, such that it is difficult to display the overlays rapidly and seamlessly. In addition, the related art also has a drawback in that the first overlay may not be displayed together with the second overlay. Further, when the first overlay and the second overlay are displayed, operations may not be performed systematically.

### SUMMARY

It is an object of the present disclosure to provide a signal processing device capable of simultaneously displaying overlays based on heterogeneous operating systems, and a vehicle display apparatus including the same.

It is another object of the present disclosure to provide a signal processing device capable of seamlessly displaying overlays based on heterogeneous operating systems, and a vehicle display apparatus including the same.

It is yet another object of the present disclosure to provide a signal processing device capable of efficiently transmitting and sharing data by executing virtual machines on a hypervisor, and a vehicle display apparatus including the same.

In accordance with an aspect of the present disclosure, the above and other objects can be accomplished by providing a vehicle display apparatus including: a display located in a vehicle; and a signal processing device configured to output an image signal to the display, wherein while outputting a first overlay based on a first operating system, the signal processing device is configured to display a second overlay based on a second operating system to be overlapped on at least a partial area of the first overlay.

Meanwhile, the signal processing device may perform blending on at least the partial area of the first overlay, and may be configured to display the second overlay to be overlapped on the blended area.

Meanwhile, the signal processing device may execute a hypervisor and may generate the first overlay based on the first operating system on the hypervisor; may generate the second overlay based on the second operating system on the hypervisor; and may be configured to display the second overlay to be overlapped on at least the partial area of the first overlay.

Meanwhile, the signal processing device may include a processor to execute a hypervisor, wherein the processor may generate the first overlay based on the first operating system on the hypervisor; may generate the second overlay based on the second operating system on the hypervisor; and may be configured to display the second overlay to be overlapped on at least the partial area of the first overlay.

Meanwhile, while outputting a plurality of first overlays based on the first operating system, the signal processing device may be configured to display the second overlay based on the second operating system to be overlapped on any one of the plurality of first overlays.

Meanwhile, the first overlay may include at least one application item based on the first operating system; and the second overlay may include at least one application item based on the second operating system.

Meanwhile, the first overlay may include a menu and a plurality of application items based on the first operating system; and the second overlay may include at least one application item based on the second operating system.

Meanwhile, in response to a first application item based on the second operating system being selected, the signal processing device may output an overlay including a screen of the first application based on the second operating system.

Meanwhile, while the signal processing device outputs the first overlay based on the first operating system, in response to an application view item in the first overlay being selected, the signal processing device may be configured to display a second overlay including a plurality of application items based on the second operating system to be overlapped on a partial area of the first overlay.

Meanwhile, in response to a first application item being selected from among the plurality of application items, the signal processing device may be configured to display an overlay related to the first application to be overlapped on the partial area of the first overlay.

Meanwhile, while the signal processing device outputs the first overlay based on the first operating system: in response to an application view item in the first overlay being selected, the signal processing device may be configured to display a second overlay including a plurality of application items based on the second operating system to be overlapped on a partial area of the first overlay; and in response to a first application item being selected from among the plurality of application items, the signal processing device may be configured to display an overlay related to the first application to be overlapped on the partial area of the first overlay.

Meanwhile, while the signal processing device outputs a first overlay including a plurality of application items based on the first operating system, in response to a first application item based on the second operating system being selected from among the plurality of application items, the signal processing device may be configured to display a second overlay including a screen of the first application based on the second operating system to be overlapped on the partial area of the first overlay.

Meanwhile, the signal processing device may be configured to add preview information or a message based on the second operating system in the partial area of the first overlay based on the first operating system, wherein in response to the preview information or the message being selected, the signal processing device may display the second overlay including a screen corresponding to the preview information or the message.

Meanwhile, the signal processing device may be configured to display the second overlay including the screen corresponding to the preview information or the message based on the second operating system to be overlapped on at least the partial area of the first overlay.

Meanwhile, the signal processing device may include a processor configured to perform signal processing for the display, wherein on the hypervisor in the processor, the processor may execute a server virtual machine on the first operating system and a guest virtual machine executed for the display on the second operating system.

Meanwhile, the server virtual machine may output a first overlay based on the first operating system; and the guest virtual machine may be configured to display a second overlay to be overlapped on at least a partial area of the first overlay.

Meanwhile, the processor may transmit the first overlay, output from the server virtual machine, to the guest virtual machine through an interface.

Meanwhile, the processor may execute a hypervisor and may transmit the first overlay, output from the server virtual machine, to the guest virtual machine through a shared memory in the hypervisor.

In accordance with another aspect of the present disclosure, the above and other objects can be accomplished by providing a signal processing device including a processor configured to output an image signal to a display located in a vehicle, wherein while outputting a first overlay based on a first operating system, the signal processing device is configured to display a second overlay based on a second operating system to be overlapped on at least a partial area of the first overlay.

Meanwhile, the processor may execute a hypervisor and may generate the first overlay based on the first operating system on the hypervisor; may generate the second overlay based on the second operating system on the hypervisor; and may be configured to display the second overlay to be overlapped on at least the partial area of the first overlay.

### BRIEF DESCRIPTION OF THE DRAWINGS

The embodiments will be described in detail with reference to the following drawings in which like reference numerals refer to like elements wherein:
FIG. 1A is a view showing an example of the exterior and interior of a vehicle;
FIG. 1B is a view showing another example of the interior of the vehicle;
FIG. 2 is a view showing the external appearance of a display apparatus for vehicles according to an embodiment of the present disclosure;
FIG. 3 illustrates an example of an internal block diagram of the display apparatus for vehicles of FIG. 2;
FIGS. 4A and 4B are diagrams referred to in the description of operation of a vehicle display apparatus related to the present disclosure;
FIG. 5 is a diagram illustrating an example of a system executed by a vehicle display apparatus according to an embodiment of the present disclosure;
FIGS. 6A to 6C are diagrams illustrating various examples of a system executed by a vehicle display apparatus according to an embodiment of the present disclosure;
FIGS. 7A to 9C are diagrams referred to in the description of FIGS. 5 to 6C;

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

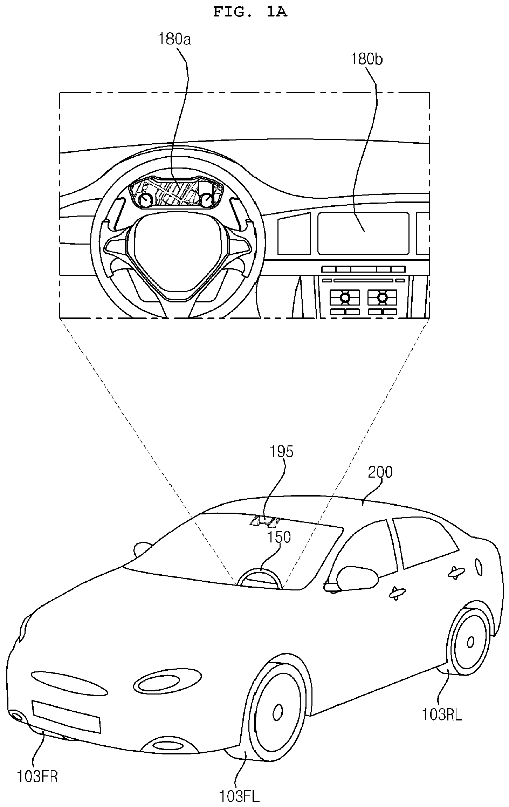

FIG. 1A is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

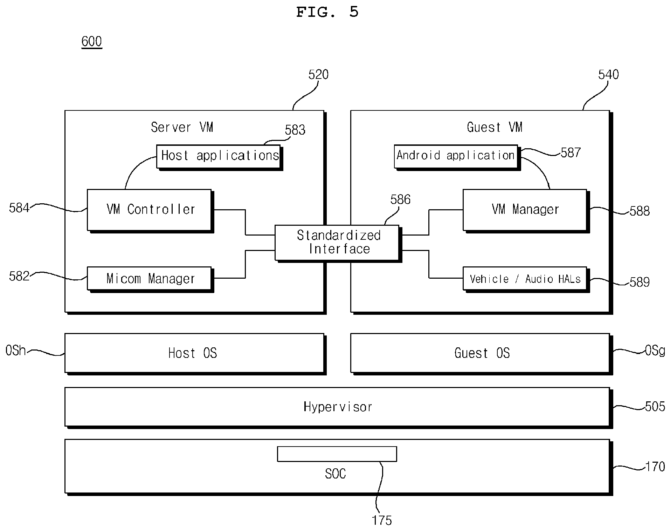

The embodiment of the present disclosure proposes a method of simultaneously displaying overlays based on heterogeneous operating systems in a vehicle display apparatus 100 including a plurality of displays 180a and 180b, which will be described later with reference to FIG. 5.

Meanwhile, the vehicle 200 described in this specification may be a concept including all of a vehicle having an engine as a power source, a hybrid vehicle having an engine and an electric motor as a power source, and an electric vehicle having an electric motor as a power source.

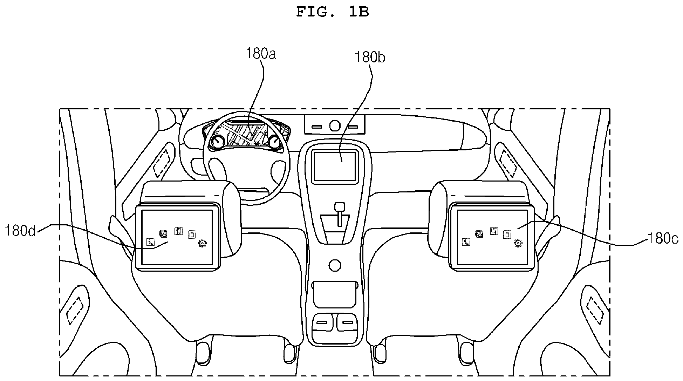

FIG. 1B is a view showing another example of the interior of the vehicle.

Referring to the figure, a cluster display 180a, an audio video navigation (AVN) display 180b, rear seat entertainment displays 180c and 180d, and a rear-view mirror display (not shown) may be located in the vehicle.

The embodiment of the present disclosure proposes a method of simultaneously displaying overlays based on heterogeneous operating systems in a vehicle display apparatus 100 including a plurality of displays 180a to 180d, which will be described later with reference to FIG. 5.

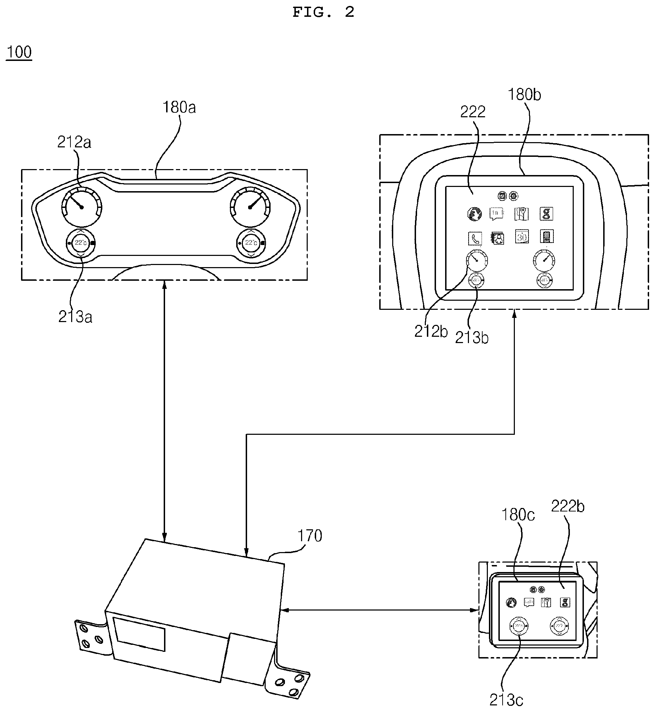

FIG. 2 is a view showing the external appearance of a vehicle display apparatus according to an embodiment of the present disclosure.

The vehicle display apparatus 100 according to the embodiment of the present disclosure may include a plurality of displays 180a and 180b and a signal processing device 170 configured to perform signal processing to display images and information on the plurality of displays 180a and 180b.

Among the plurality of displays 180a and 180b, the first display 180a may be a cluster display 180a for displaying a driving state and operation information, and the second display 180b may be an audio video navigation (AVN) display 180b for displaying vehicle driving information, a navigation map, various kinds of entertainment information, or an image.

The signal processing device 170 may have a processor 175 provided therein and may execute a hypervisor 505 (see FIG. 5) in the processor 175.

The signal processing device 170 in the processor 175 may execute first to third virtual machines 520 to 540 on a hypervisor 505.

The second virtual machine 530 may be executed for the first display 180a, and the third virtual machine 540 may be executed for the second display 180b.

Meanwhile, the first virtual machine 520 in the processor 175 may set a shared memory 508 (see FIG. 13) based on the hypervisor 505 for transmission of identical data to the second virtual machine 530 and the third virtual machine 540. Accordingly, the first display 180a and the second display 180b in the vehicle may display identical information or identical images in a synchronized state.

For data sharing, the first virtual machine 520 in the processor 175 may share at least a portion of data with the second virtual machine 530 and the third virtual machine 540. Accordingly, data sharing may be performed between the plurality of virtual machines for the plurality of displays in the vehicle.

Meanwhile, the first virtual machine 520 in the processor 175 may receive and process wheel speed sensor data of the vehicle, and may transmit the processed wheel speed sensor data to at least one of the second virtual machine 530 or the third virtual machine 540. Consequently, at least one virtual machine may share the wheel speed sensor data of the vehicle.

Meanwhile, the vehicle display apparatus 100 according to the embodiment of the present disclosure may further include a rear seat entertainment (RSE) display 180c configured to display driving state information, simple navigation information, various kinds of entertainment information, or an image.

The signal processing device 170 may further execute a fourth virtual machine (not shown), in addition to the first to third virtual machines 520 to 540, on the hypervisor 505 in the processor 175 to control the RSE display 180c.

Consequently, it is possible to control various displays 180a to 180c using a single signal processing device 170.

Meanwhile, some of the plurality of displays 180a to 180c may operate under a first Operating System (OS), and others may operate under a second Operating System (OS).

For example, some of the plurality of displays 180a to 180c may operate under QNX OS or Linux OS, and others may operate under Android OS or Web OS.

In response to touch input on any one of the plurality of displays 180a and 180b or 180a to 180c operating under various operating systems, the signal processing device 170 according to the embodiment of the present disclosure may process the touch input rapidly and accurately.

A vehicle speed indicator 212a and a vehicle internal temperature indicator 213a are displayed on the first display 180a; a home screen 222 including a plurality of applications, a vehicle speed indicator 212b and a vehicle internal temperature indicator 213b is displayed on the second display 180b; and a second home screen 222b including a plurality of applications and a vehicle internal temperature indicator 213c is displayed on the third display 180c.

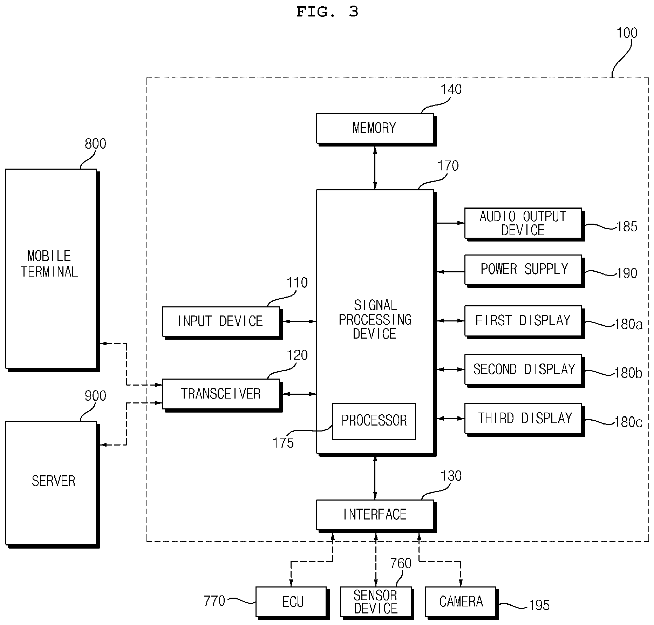

FIG. 3 illustrates an example of an internal block diagram of a vehicle display apparatus according to the embodiment of the present disclosure.

Referring to the drawing, the vehicle display apparatus 100 according to the embodiment of the present disclosure may include an input device 110, a transceiver 120, an interface 130, a memory 140, a signal processing device 170, a plurality of displays 180a to 180c, an audio output device 185, and a power supply 190.

The input device 110 may include a physical button or pad for button input or touch input.

The input device 110 may include a touch sensor (not shown) for sensing touch input on the displays 180a, 180b, and 180c.

Meanwhile, the input device 110 may include a microphone (not shown) for user voice input.

The transceiver 120 may wirelessly exchange data with a mobile terminal 800 or a server 900.

In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

The transceiver 120 may receive weather information and road traffic situation information, such as transport protocol expert group (TPEG) information, from the mobile terminal 800 or the server 900. To this end, the transceiver 120 may include a mobile communication module (not shown).

The interface 130 may receive sensor information from an electronic control unit (ECU) 770 or a sensor device 750, and may transmit the received information to the signal processing device 170.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information or in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

Meanwhile, the interface 130 may receive front-of-vehicle image data, side-of-vehicle image data, rear-of-vehicle image data, and obstacle-around-vehicle distance information from a camera 195 or lidar (not shown), and may transmit the received information to the signal processing device 170.

The memory 140 may store various data necessary for overall operation of the display apparatus 100 for vehicles, such as programs for processing or control of the signal processing device 170.

For example, the memory 140 may store data about the hypervisor and first to third virtual machines executed by the hypervisor in the processor 175.

The audio output device 185 may convert an electrical signal from the signal processing device 170 into an audio signal, and may output the audio signal. To this end, the audio output device 185 may include a speaker.

The power supply 190 may supply power necessary to operate components under control of the signal processing device 170. In particular, the power supply 190 may receive power from a battery in the vehicle.

The signal processing device 170 may control overall operation of each device in the display apparatus 100 for vehicles.

For example, the signal processing device 170 may include a processor 175 configured to perform signal processing for the displays 180a and 180b.

The processor 175 may execute the first to third virtual machines 520 to 540 on the hypervisor 505 in the processor 175.

Meanwhile, the signal processing device 175 may further execute a legacy virtual machine configured to receive and process Ethernet data. For example, the legacy virtual machine may be executed on the first virtual machine 520 in the processor 175.

Among the first to third virtual machines 520 to 540 (see FIG. 10), the first virtual machine 520 may be referred to as a server virtual machine, and the second and third virtual machines 530 and 540 may be referred to as guest virtual machines.

In this case, the first guest virtual machine, which is the second virtual machine 530, may be executed for the first display 180a, and the second guest virtual machine, which is the third virtual machine 540, may be executed for the second display 180b.

For example, the first virtual machine 520 in the processor 175 may receive, process, and output vehicle sensor data, position information data, camera image data, audio data, or touch input data. Data processed only by a legacy virtual machine and data processed by the first virtual machine 520 may be distinguished from each other, whereby data processing may be efficiently performed. In particular, the first virtual machine 520 may process most of the data, whereby 1:N data sharing may be achieved.

As another example, the first virtual machine 520 may directly receive and process CAN communication data, audio data, radio data, USB data, and wireless communication data for the second and third virtual machines 530 and 540.

The first virtual machine 520 may transmit the processed data to the second and third virtual machines 530 and 540.

Consequently, only the first virtual machine 520, among the first to third virtual machines 520 to 540, may receive communication data and external input data, and may perform signal processing, whereby load in signal processing by the other virtual machines may be reduced and 1:N data communication may be achieved, and therefore synchronization at the time of data sharing may be achieved.

Meanwhile, the first virtual machine 520 may be configured to write a portion of data in a first shared memory (not shown) to be transmitted to the second virtual machine 530, and another portion of the data is written in the first shared memory (not shown) to be transmitted to the third virtual machine 540, in which the second virtual machine 530 and the third virtual machine 540 may process the transmitted data so that the processed data may be written in a second shared memory (not shown), thereby simultaneously displaying overlays based on heterogeneous operating systems.

In this case, the data may be any one of image data, audio data, navigation data, or speech recognition data.

The first virtual machine 520 may process yet another portion of data so that the processed data may be written in the second shared memory (not shown). That is, in addition to the second virtual machine 530 and the third virtual machine, the first virtual machine 520 may perform data processing.

If a fourth virtual machine 550 is executed for the third display 180c in the processor 175, the first virtual machine 520 may be configured to write yet another portion of the data in the first shared memory (not shown), in which the fourth virtual machine 550 may process the transmitted data so that the processed data may be written in the second shared memory (not shown).

The first virtual machine 520 may create a command queue for distributed processing of data in each of the second virtual machine 530 and the third virtual machine 540, such that data processing may be shared among the plurality of virtual machines.

In the case where the second and third virtual machines 530 and 540 share identical data, the first virtual machine 520 in the processor 175 may create the same command queue, such that the identical data may be synchronized and shared among the virtual machines.

The first virtual machine 520 may create command queues in a number corresponding to the number of virtual machines for distributed processing of data.

For distributed processing of data, the first virtual machine 520 may be configured to transmit at least a portion of data to at least one of the second virtual machine 530 or the third virtual machine 540.

For example, the first virtual machine 520 may allocate the first shared memory (not shown) for transmitting at least a portion of data to at least one of the second virtual machine 530 or the third virtual machine 540, and image data processed by the second virtual machine 530 or the third virtual machine 540 may be written in the second shared memory (not shown).

Meanwhile, the first virtual machine 520 may perform control such that data are written in the shared memory 508, whereby the second virtual machine 530 and the third virtual machine 540 share identical data.

For example, the first virtual machine 520 may control radio data or wireless communication data to be written in the shared memory 508, such that the second virtual machine 530 and the third virtual machine 540 may share the identical data. Accordingly, 1:N data sharing may be achieved.

Eventually, the first virtual machine 520 may process most of the data, whereby 1: N data sharing may be achieved.

Meanwhile, the first virtual machine 520 in the processor 175 may be configured to set the shared memory 508 based on the hypervisor 505 in order to transmit identical data to the second virtual machine 530 and the third virtual machine 540.

That is, the first virtual machine 520 in the processor 175 may transmit identical data to the second virtual machine 530 and the third virtual machine 540 in a synchronized state using the shared memory 508 based on the hypervisor 505. Consequently, the plurality of displays 180a and 180b in the vehicle may display identical images in a synchronized state.

Meanwhile, the signal processing device 170 may process various signals, such as an audio signal, an image signal, and a data signal. To this end, the signal processing device 170 may be implemented in the form of a system on chip (SOC).

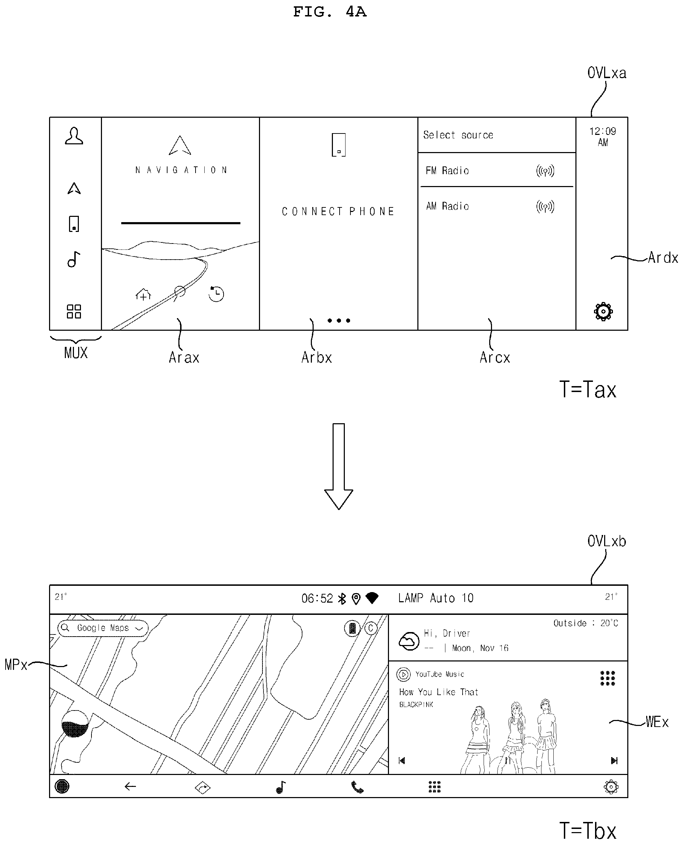

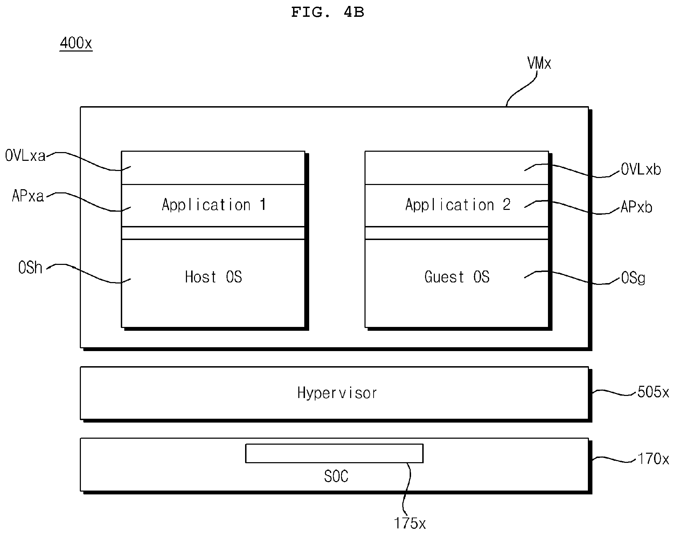

FIGS. 4A and 4B are diagrams referred to in the description of operation of a vehicle display apparatus related to the present disclosure.

FIG. 4A illustrates an example in which while outputting a first overlay OVLxa, a signal processing device in the vehicle display apparatus related to the present disclosure outputs a second overlay OVLxb by screen switching.

Referring to the drawing, the signal processing device in the vehicle display apparatus related to the present disclosure may output the first overlay OVLxa, corresponding to a first application executing on a first operating system, at a first time point.

The first overlay OVLxa may include a first menu area MUx including a plurality of application view items, a map area Arax for displaying a map based on vehicle driving, external device display area Arbx for displaying information on a connected electronic device, a radio display area Arcx for displaying radio information, and a second menu area Ardx including setting items, a time item, and the like.

Meanwhile, the signal processing device in the vehicle display apparatus related to the present disclosure may output the second overlay OVLxb, corresponding to a second application executing on a second operating system, at a second time point after the first time point.

The second overlay OVLxb may include a map area MPx for displaying a map based on vehicle driving, and an information area Wex including weather information such as external temperature, and application information providing streaming services.

FIG. 4B is a diagram illustrating a system for outputting the first overlay OVLxa and the second overlay OVLxb of FIG. 4A.

Referring to the drawing, a system 400x, executed by a signal processing device 175x in the vehicle display apparatus related to the present disclosure, executes a hypervisor 505x in the processor 175x, executes a first operating system OSh on the hypervisor 505x, and executes a first application APxa on the first operating system OSh.

Further, as the first application APxa executes, the signal processing device 175x may output the first overlay OVLxa corresponding to the first application APxa executing on the first operating system OSh.

The system 400x, executed by the signal processing device 175x in the vehicle display apparatus related to the present disclosure, executes the hypervisor 505x in the processor 175x, executes a second operating system OSg, which is different from the first operating system OSh, on the hypervisor 505x, and executes a second application APxb on the second operating system OSg.

Further, as the second application APxb executes, the signal processing device 175x may output the second overlay OVLxb corresponding to the second application APxb executing on the second operating system OSg.

As illustrated in FIG. 4A, while displaying the first overlay OVLxa on the AVN display 180b, the signal processing device 175x may output the second overlay OVLxb, corresponding to the second application APxb executing on the second operating system OSg, to the AVN display 180b instead of the first overlay OVLxa. In this case, as the first application APxa executes, the signal processing device 175x in the vehicle display apparatus related to the present disclosure is required to generate and output the first overlay OVLxa corresponding to the first application APxa executing on the first operating system OSh at the first time point; and then, as the second application APxb executes, the signal processing device 175x may generate and output the second overlay OVLxb corresponding to the second application APxb executing on the second operating system OSg at the second time point after the first time point.

Accordingly, as illustrated in FIGS. 4A and 4B, there is a drawback in that when displaying the second overlay OVLxb after the first overlay OVLxa based on heterogeneous operating systems, the overlays may not be displayed rapidly and seamlessly.

In addition, there is also a drawback in that the first overlay OVLxa may not be displayed together with the second overlay OVLxb. Further, when the first overlay OVLxa and the second overlay OVLxb are displayed, operations may not be performed systematically.

Accordingly, the embodiment of the present disclosure provides a method of simultaneously displaying overlays based on heterogeneous operating systems. Particularly, the present disclosure provides a method of seamlessly displaying the overlays based on heterogeneous operating systems, which will be described below with reference to FIG. 5 and subsequent figures.

FIG. 5 is a diagram illustrating an example of a system executed by a vehicle display apparatus according to an embodiment of the present disclosure.

Referring to the drawing, a system 600 executed by the signal processing device 170 in a vehicle display apparatus 100 according to an embodiment of the present disclosure executes the hypervisor 505 in the processor 175, executes a first operating system OSh on the hypervisor 505, executes a first application APa on the first operating system OSh, executes a second operating system OSg, which is different from the first operating system OSh, on the hypervisor 505, and executes a second application APb on the second operating system OSg.

Meanwhile, while outputting the first overlay OVLa based on the first operating system OSh, the signal processing device 170 in the vehicle display apparatus 100 according to the embodiment of the present disclosure may be configured to display the second overlay OVLb based on the second operating system OSg to be overlapped on at least a portion of the first overlay OVLa. Accordingly, the signal processing device 170 may simultaneously display the overlays based on the heterogeneous operating systems. Further, the signal processing device 170 may seamlessly display the overlays based on the heterogeneous operating systems.

Meanwhile, the signal processing device 170 may perform synchronization of set values, notification information, and the like between the first operating system OSh and the second operating system OSg in order to provide seamless operation in a single execution environment between the first operating system OSh and the second operating system OSg.

Meanwhile, the synchronization of set values may include synchronization of lists of installed applications, screen brightness, languages, and the like between the first operating system OSh and the second operating system OSg.

Meanwhile, the signal processing device 170 may control specific information to be shared between the first operating system Osh and the second operating system OSg.

In this case, the shared specific information may include vehicle information, such as a vehicle model, vehicle identification number, speed information, sensor information, etc., power state information, driver information, and the like.

Meanwhile, the signal processing device 170 may execute the hypervisor 505, may generate the first overlay OVLa based on the first operating system OSh on the hypervisor 505, may generate the second overlay OVLb based on the second operating system OSg on the hypervisor 505, and may display the second overlay OVLb superimposed on at least a portion of the first overlay OVLa. Accordingly, the signal processing device 170 may simultaneously display the overlays based on the heterogeneous operating systems.

Meanwhile, the signal processing device 170 may include the processor 175 for executing the hypervisor 505, in which the processor 175 may generate the first overlay OVLa based on the first operating system OSh on the hypervisor 505, may generate the second overlay OLVb based on the second operating system OSg on the hypervisor 505, and may display the second overlay OVLb superimposed on at least a portion of the first overlay OVLa. Accordingly, the signal processing device 170 may simultaneously display the overlays based on the heterogeneous operating systems.

Meanwhile, the signal processing apparatus 170 may include the processor 175 for performing signal processing for the display 180b, in which the processor 175 may execute a server virtual machine 520 based on the first operating system OSh on the hypervisor 505 in the processor 175, a guest virtual machine 540 executed for the display 180b based on the second operating system OSg on the hypervisor 505 in the processor 175, thereby stably executing the virtual machines on the heterogeneous operating systems.

In the drawing, an example is shown in which the server virtual machine 520 is executed on the first operating system OSh, and the guest virtual machine 540 is executed on the second operating system OSg.

Meanwhile, the server virtual machine 520 may execute a Micom manager 582 for controlling a microcomputer in the vehicle, a virtual machine controller 584 for controlling the virtual machines, an application 583 executing on the first operating system OSh, and the like.

Meanwhile, the guest virtual machine 540 may correspond to a second guest virtual machine 540 of FIG. 10 which will be described later.

Meanwhile, the guest virtual machine 540 may execute a hardware abstraction layer (HAL) 589 for processing vehicle data or audio data, a virtual machine manager 588 for managing virtual machines, an application 587 on the second operating system OSg, and the like.

Meanwhile, the server virtual machine 520 may output the first overlay OVLa based on the first operating system OSh, and the guest virtual machine 540 may display the second overlay OVLb based on the second operating system OSg which is superimposed on at least a portion of the first overlay OVLa, thereby simultaneously displaying the overlays based on heterogeneous operating systems.

Meanwhile, the processor 175 may transmit the first overlay OVLa, output from the server virtual machine 520, to the guest virtual machine 540 through an interface 586, thereby simultaneously displaying the overlays based on heterogeneous operating systems.

The interface 586 may be used for data transmission between the server virtual machine 520 and the guest virtual machine 540.

The first operating system OSh may be QNX OS or Linux Operating System (OS), and the second operating system OSg may be Android OS or Web Operating System (OS).

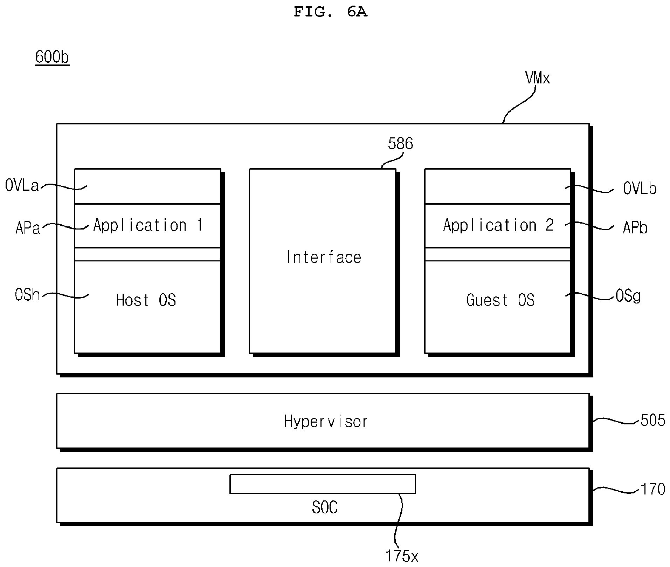

FIGS. 6A to 6C are diagrams illustrating various examples of a system executed by a vehicle display apparatus according to an embodiment of the present disclosure.

First, referring to FIG. 6A, a system 600b executed by the signal processing device 170 in a vehicle display apparatus 100 according to another embodiment of the present disclosure executes the hypervisor 505 in the processor 175, executes the first operating system OSh on the hypervisor 505, executes the first application APa on the first operating system OSh, executes the second operating system OSg, which is different from the first operating system OSh, on the hypervisor 505, and executes the second application APb on the second operating system OSg.

In the system 600b of FIG. 6A, similarly to the system 600 of FIG. 5, the processor 175 in the signal processing device 170 executes the first application APa on the first operating system OSh, generates and outputs the first overlay OVLa corresponding to the first application APa, executes the second application APb on the second operating system OSg, and generates and outputs the second overlay OVLb corresponding to the second application APb.

Particularly, the processor 175 may transmit the first overlay OVLa from the first application APa to the second overlay OVLb from the second application APb through the interface 586.

Accordingly, while outputting the first overlay OVLa based on the first operating system OSh, the signal processing device 170 may be configured to display the second overlay OVLb based on the second operating system OSg to be overlapped on a portion of the first overlay OVLa.

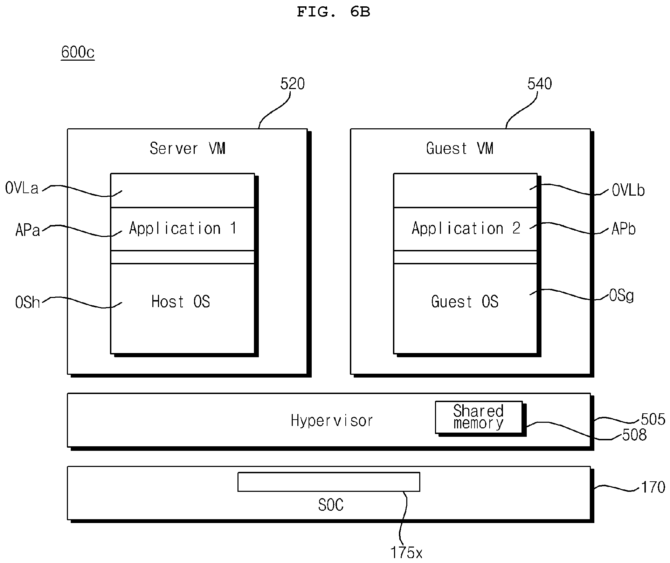

Then, as in FIG. 6A, a system 600c of FIG. 6B which is executed by the signal processing device 170 in the vehicle display apparatus 100 according to yet another embodiment of the present disclosure executes the hypervisor 505 in the processor 175, executes the first operating system OSh on the hypervisor 505, executes the first application APa on the first operating system OSh, executes the second operating system OSg, which is different from the first operating system OSh, on the hypervisor 505, and executes the second application APb on the second operating system OSg.

In the system 600c of FIG. 6B, similarly to the system 600a of FIG. 5, the processor 175 in the signal processing device 170 executes the first application APa on the first operating system OSh, generates and outputs the first overlay OVLa corresponding to the first application APa, executes the second application APb on the second operating system OSg, and generates and outputs the second overlay OVLb corresponding to the second application APb.

Meanwhile, the signal processing device 170 includes the processor 175 for performing signal processing for the display 180b, in which the processor 175 may execute the server virtual machine 520 on the first operating system OSh and the guest virtual machine 540 executed for the display 180b on the second operating system OSg, on the hypervisor 505 in the processor 175, thereby stably executing the virtual machines on the heterogeneous operating systems.

Meanwhile, the processor 175 may execute the hypervisor 505 and may transmit the first overlay OVLa output from the server virtual machine 520 to the guest virtual machine 540 through the shared memory 508 in the hypervisor 505.

Accordingly, by executing the virtual machines on the hypervisor 505, data may be transmitted or shared efficiently.

As a result, while outputting the first overlay OVLa based on the first operating system OSh, the signal processing device 170 may be configured to display the second overlay OVLb based on the second operating system OSg to be overlapped on at least a portion of the first overlay OVLa.

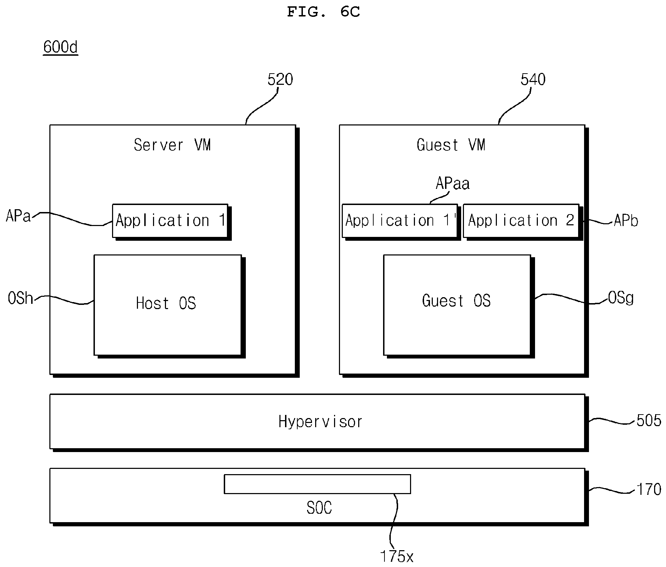

Then, similarly to the system 600c of FIG. 6B, a system 600d of FIG. 6C which is executed by the signal processing device 170 in the vehicle display apparatus 100 according to still another embodiment of the present disclosure may execute the server virtual machine 520 on the first operating system OSh and the guest virtual machine 540 executed for the display 180b on the second operating system OSg, on the hypervisor 505 in the processor 175.

Meanwhile, the server virtual machine 520 executes the first application APa on the first operating system OSh and may output the first overlay OVLa through the first application APa.

Meanwhile, the guest virtual machine 540 may execute the second application APb on the second operating system OSg and may output the second overlay OVLb through the second application APb.

In addition to the second application APb based on the second operating system OSg, the guest virtual machine 540 may further execute the first application APaa in order to display the second overlay OVLb superimposed on at least a portion of the first overlay OVLa.

The signal processing device 170 may perform blending on at least a partial area of the first overlay OVLa by using the first application APaa executing on the second operating system OSg, and may be configured to display the second overlay OVLb based on the second operating system OSg to be overlapped on the blended area. Accordingly, the signal processing device 170 may simultaneously display the overlays based on the heterogeneous operating systems.

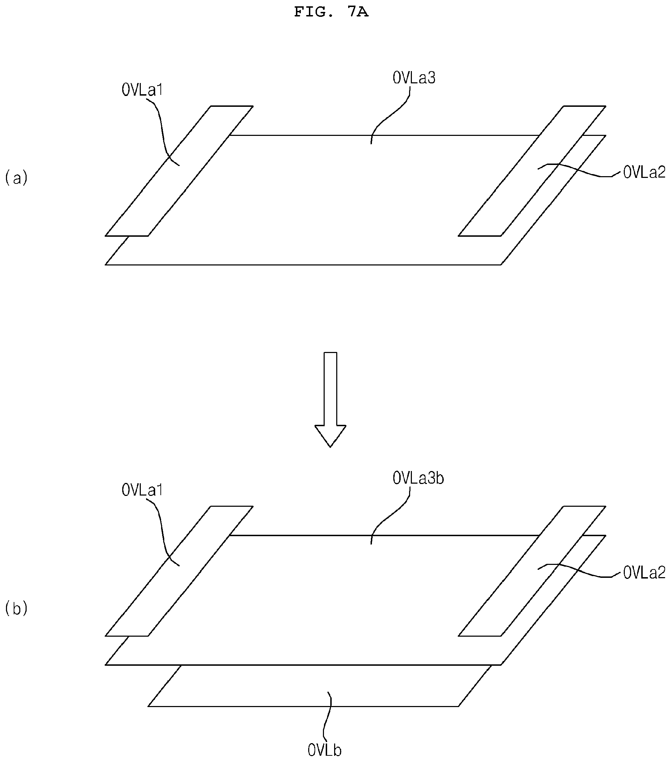

Meanwhile, while outputting a plurality of first overlays OVLa1, OVLa2, and OVLa3 based on the first operating system OSh, the signal processing device 170 may be configured to display the second overlay OVLb based on the second operating system OSg to be overlapped on at least any one of the plurality of first overlays OVLa1, OVLa2, and OVLa3. Accordingly, the signal processing device 170 may simultaneously display the overlays based on the heterogeneous operating systems, which will be described below with reference to FIG. 7A.

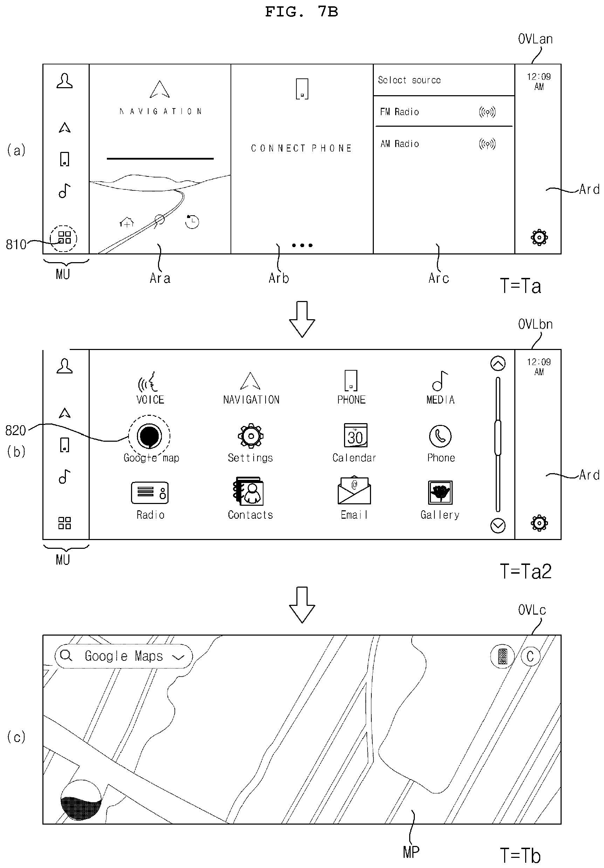

FIG. 7A is a diagram referred to in the description of blending of the first overlay and the second overlay, and FIGS. 7B to 7D are diagrams referred to in the description of FIG. 7A.

Referring to the drawing, (a) of FIG. 7A illustrates the plurality of first overlays OVLa1, OVLa2, and OVLa3 based on the first operating system OSh.

Meanwhile, during a first period of time, the signal processing device 170 may generate and output the plurality of first overlays OVLa1, OVLa2, and OVLa3 based on the first operating system OSh.

A left area OVLa1 of the first overlays OVLa1, OVLa2, and OVLa3 in FIG. 7A corresponds to a first menu area MU in FIG. 7B; a right area OVLa2 of the first overlays OVLa1, OVLa2, and OVLa3 in FIG. 7A corresponds to a second menu area Ard in FIG. 7B; a central area of the first overlays OVLa1, OVLa2, and OVLa3 in FIG. 7A may include a map area Ara, an external device display area Arb, and a radio display area Arc.

If it is required to display the second overlay OVLb based on the second operating system OSg according to an input signal and the like, the signal processing device 170 may generate and output the second overlay OVLb based on the second operating system OSg after the first period of time.

In this case, as illustrated in (b) of FIG. 7A, the signal processing device 170 may perform blending on the central area OVLa3 of the first overlays OVLa1, OVLa2, and OVLa3, and may be configured to display the second overlay OVLb based on the second operating system OSg to be overlapped on the blended area OVLa3b.

Particularly, the signal processing device 170 may apply alpha blending to the central area OVLa3 of the first overlays OVLa1, OVLa2, and OVLa3, and may be configured to display the second overlay OVLb based on the second operating system OSg to be overlapped on the alpha-blended area OVLa3. Accordingly, the signal processing device 170 may simultaneously display the overlays based on the heterogeneous operating systems.

FIG. 7B is a diagram illustrating an example in which while outputting a first overlay OVLan based on the first operating system OSh, the signal processing device 170 outputs a second overlay OVLbn based on the second operating system OSg.

Referring to the drawing, the signal processing device 170 may generate and output the first overlay OVLan based on the first operating system OSh at a first time point, thereby displaying the first overlay OVLan on the AVN display 180b.

Meanwhile, the first overlay OVLa may include the first menu area MU including a plurality of applications view item 810 and the like, the map area Ara for displaying a map based on vehicle driving, the external device display area Arb for displaying information on a connected electronic device, the radio display area Arc for displaying radio information, and a second menu area Ard including a set item, a time item, and the like.

While the signal processing device 170 outputs the first overlay OVLan based on the first operating system OSh, if the applications view item 810 in the first overlay OVLan is selected, the signal processing device 170 displays the second overlay OVLbn superimposed on a portion of the first overlay OVLa.

Specifically, if the applications view item 810 is selected in the first overlay OVLan, the signal processing device 170 may perform blending on the map area Ara, the external device display area Arb, and the radio display area Arc, which are partial areas of the first overlay OVLa, and may display the second overlay OVLbn superimposed on the blended areas.

In this case, the first menu area MU is displayed as it is on the left side of the second overlay OVLbn, and the second menu area Ard is displayed as it is on the right side of the second overlay OVLbn. Accordingly, the signal processing device 170 may simultaneously display the overlays based on the heterogeneous operating systems.

The second overlay OVLbn based on the second operating system OSg may be an application screen including a plurality of application items.

Meanwhile, if a map-related application item 820 is selected from among the plurality of application items in the second overlay OVLbn based on the second operating system OSg, the signal processing device 170 may generate and display a third overlay OVLc based on the second operating system OSg.

In the drawing, an example is shown in which the third overlay OVLc is displayed to be overlapped on the first menu area MU as well as on the second menu area Ard, but the display of the third overlay may be changed.

Meanwhile, in FIG. 7B, a portion of the plurality of application items may be application items based on the first operating system OSh, and the other portion of the plurality of application items may be application items based on the second operating system OSg. In this case, the map-related application item 820 may be an application item based on the second operating system OSg.

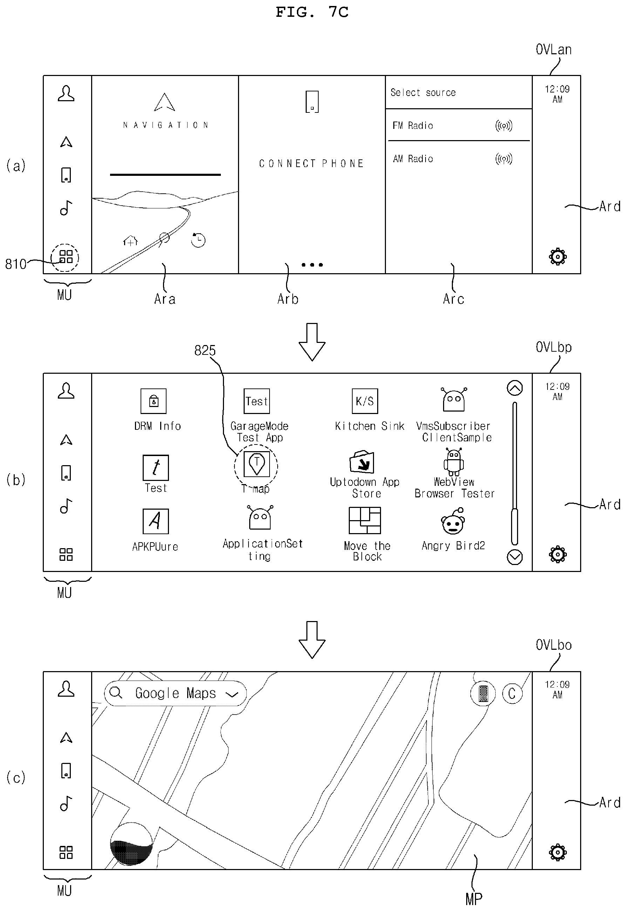

FIG. 7C is a diagram illustrating an example in which while outputting the first overlay OVLan based on the first operating system OSh, the signal processing device 170 outputs a second overlay OVLbp based on the second operating system OSg.

Referring to the drawing, the signal processing device 170 may generate and output the first overlay OVLan based on the first operating system OSh at a first time point, thereby displaying the first overlay OVLan on the AVN display 180b.

Meanwhile, the first overlay OVLa may include the first menu area MU including a plurality of applications view item 810 and the like, the map area Ara for displaying a map based on vehicle driving, the external device display area Arb for displaying information on a connected electronic device, the radio display area Arc for displaying radio information, and a second menu area Ard including a set item, a time item, and the like.

If the applications view item 810 is selected in the first menu area MU, the signal processing device 170 may be configured to display the second overlay OVLbp to be overlapped on the entire area of the first overlay OVLa.

The second overlay OVLbp based on the second operating system OSg may be an application screen including a plurality of application items.

Meanwhile, if a first application item 820 is selected from among the plurality of application items, the signal processing device 170 may be configured to display an overlay OVbo related to the first application to be overlapped on a portion of a first overlay OVLann. Accordingly, the signal processing device 170 may rapidly display the overlays based on the heterogeneous operating systems.

For example, if the map-related application item 825 is selected from among the plurality of application items in the second overlay OVLbp based on the second operating system OSg, the signal processing device 170 may generate and display the third overlay OVLbo based on the second operating system OSg.

In the drawing, an example is shown in which the third overlay OVLbo is displayed, with the first menu area MU displayed on the left side of the third overlay OVLbo, and the second menu area Ard displayed on the right side of the third overlay OVLbo.

That is, the third overlay OVLbo based on the second operating system OSg may be displayed to be overlapped on the map area Ara, the external device display area Arb, and the radio display area Arc, which are partial areas of the first overlay OVLa. Accordingly, the signal processing device 170 may simultaneously display the overlays based on the heterogeneous operating systems.

Meanwhile, in FIG. 7C, a portion of the plurality of application items may be application items based on the first operating system OSh, and the other portion of the plurality of application items may be application items based on the second operating system OSg. In this case, the map-related application item 825 may be an application item based on the second operating system OSg.

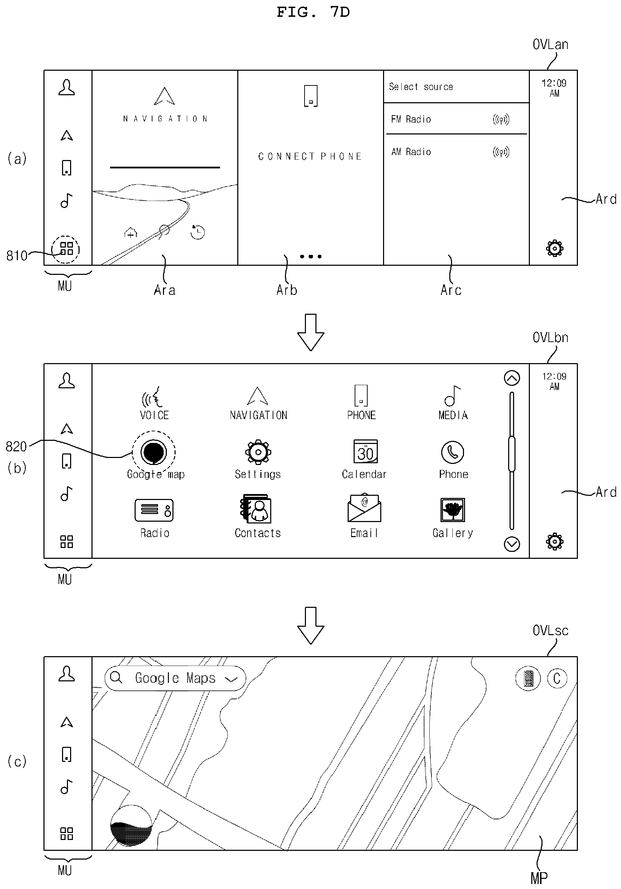

Similarly to FIG. 7B, FIG. 7D is a diagram illustrating an example in which while outputting the first overlay OVLan based on the first operating system OSh, the signal processing device 170 outputs the second overlay OVLbn based on the second operating system OSg.

Referring to the drawing, the signal processing device 170 may generate and output the first overlay OVLan based on the first operating system OSh at a first time point, thereby displaying the first overlay OVLan on the AVN display 180b.

If the applications view item 810 is selected in the first menu area MU, the signal processing device 170 may perform blending on the map area Ara, the external device display area Arb, and the radio display area Arc, which are partial areas of the first overlay OVLa, and may display the second overlay OVLbn superimposed on the blended areas.

In this case, the first menu area MU is displayed as it is on the left side of the second overlay OVLbn, and the second menu area Ard is displayed as it is on the right side of the second overlay OVLbn. Accordingly, the signal processing device 170 may simultaneously display the overlays based on the heterogeneous operating systems.

The second overlay OVLbn based on the second operating system OSg may be an application screen including a plurality of application items.

Meanwhile, if the map-related application item 820 is selected from among the plurality of application items in the second overlay OVLbn based on the second operating system OSg, the signal processing device 170 may generate and display a third overlay OVLsc based on the second operating system OSg.

In the drawing, an example is shown in which the third overlay OVLsc is displayed to be overlapped on the map area Ara, the external device display area Arb, the radio display area Arc, and the second menu area Ard.

That is, the signal processing device 170 may be configured to display the third overlay OVLsc based on the second operating system OSg to be overlapped on the map area Ara, the external device display area Arb, the radio display area Arc, and the second menu area Ard of the first overlay OVLan.

Accordingly, the first menu area MU including the plurality of applications view item 810 may be displayed as it is on the left side of the third overlay OVLsc based on the second operating system OSg, such that the signal processing device 170 may simultaneously display the overlays based on the heterogeneous operating systems.

As a result, referring to FIG. 7D, while the signal processing device 170 outputs the first overlay OVLan based on the first operating system OSh, if the applications view item 810 is selected in the first overlay OVLa, the signal processing device 170 may be configured to display the second overlay OVLbn including the plurality of application items based on the second operating system OSg to be overlapped on the first overlay OVLa; and if the first application item 820 is selected from among the plurality of application items, the signal processing device 170 may be configured to display an overlay OVLc related to the first application to be overlapped on a portion of the first overlay OVLa. Accordingly, the signal processing device 170 may simultaneously display the overlays based on the heterogeneous operating systems.

Meanwhile, in FIG. 7D, a portion of the plurality of application items may be application items based on the first operating system OSh, and the other portion of the plurality of application items may be application items based on the second operating system OSg. In this case, the map-related application item 825 may be an application item based on the second operating system OSg.

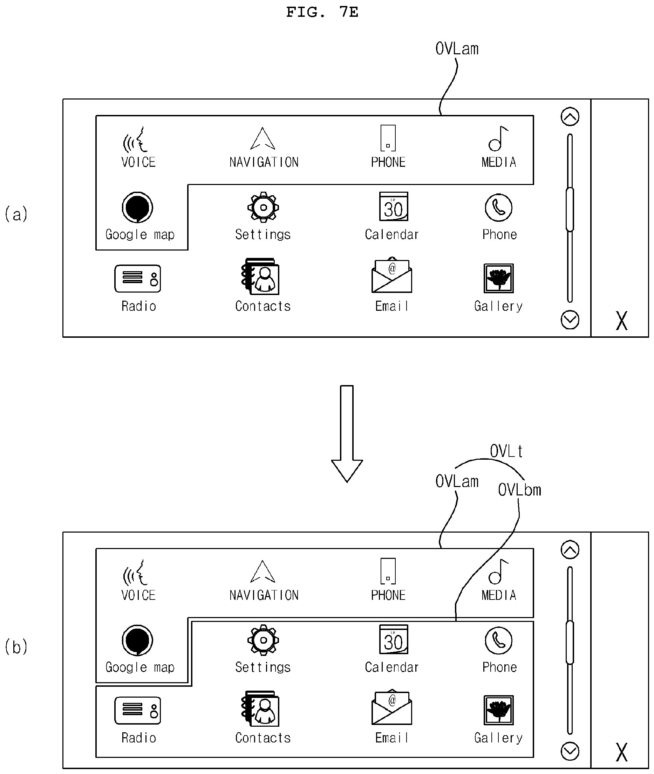

FIG. 7E is a diagram illustrating an example in which at least one application item based on the first operating system OSh is displayed together with at least one application item based on the second operating system OSg.

Referring to the drawing, the signal processing device 170 may execute the hypervisor 505, may generate a first overlay OVLam based on the first operating system OSh on the hypervisor 505, may generate a second overlay OVLbm based on the second operating system OSg on the hypervisor 505, and may display the second overlay OVLbm superimposed on at least a portion of the first overlay OVLam.

Meanwhile, the first overlay OVLam may include at least one application item based on the first operating system OSh, and the second overlay OVLbm may include at least one application item based on the second operating system OSg.

In the drawing, an example is shown in which a plurality of application items in the first overlay OVLam are displayed on the upper and left sides which are a first area, and a plurality of application items in the second overlay OVLbm are displayed on the lower and right sides which are a second area.

Meanwhile, the signal processing device 170 may apply alpha blending to the second area which is a partial area of the first overlay OVLam, and may be configured to display the second overlay OVLbm based on the second operating system OSg to be overlapped on the alpha-blended area. Accordingly, the signal processing device 170 may simultaneously display application items OVLt based on the heterogeneous operating systems.

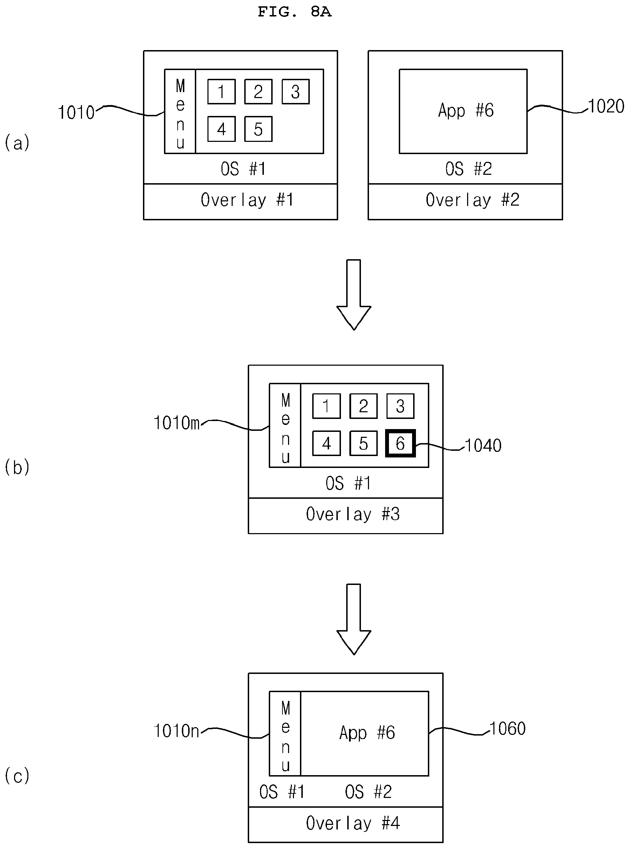

FIG. 8A is a diagram illustrating an example of simultaneously displaying menus and a plurality of application items based on heterogeneous operating systems.

Referring to the drawing, the signal processing device 170 may generate a first overlay #1 based on the first operating system OSh and a second overlay #2 based on the second operating system OSg.

In the drawing, the first overlay #1 includes a menu 1010 and a plurality of application items based on the first operating system OSh, and the second overlay #2 includes a first application screen 1020 based on the second operating system OSg.

Meanwhile, the signal processing device 170 may apply alpha blending to a partial area of the first overlay #1, and may generate a third overlay #3 including an application item 1040 based on the second operating system OSg and may display the third overlay #3 in the alpha-blended area on the display 180b.

In the drawing, an example is shown in which the third overlay #3 includes an application list 1010m including the menu 1010 and the plurality of application items based on the first operating system OSh, and the first application item 1040 based on the second operating system OSg. Accordingly, the signal processing device 170 may simultaneously display application items based on the heterogeneous operating systems.

Meanwhile, while the application items based on the heterogeneous operating systems are simultaneously displayed, if the first application item 1040 based on the second operating system OSg is selected, the signal processing device 170 may apply alpha blending to a partial area of the first overlay #1, and may perform control such that a fourth overlay #4 including a first application screen 1060 based on the second operating system OSg is output to the alpha-blended area. Accordingly, the signal processing device 170 may rapidly display the overlays based on the heterogeneous operating systems.

Meanwhile, when executing the first application based on the second operating system OSg, the signal processing device 170 may transmit information on the first application based on the second operating system OSg to the first operating system OSh, so that the first application may be executed on the first operating system OSh.

For synchronization of settings, the signal processing device 170 may transmit setting information of the first operating system OSh to the second operating system OSg, thereby setting the second operating system OSg based on the matched setting information.

For synchronization of alarms, the signal processing device 170 may display an alarm of the second operating system OSg through an alarm system of the first operating system Osh, and then may perform follow-up operations, such as displaying an alarm, removing an alarm, and the like.

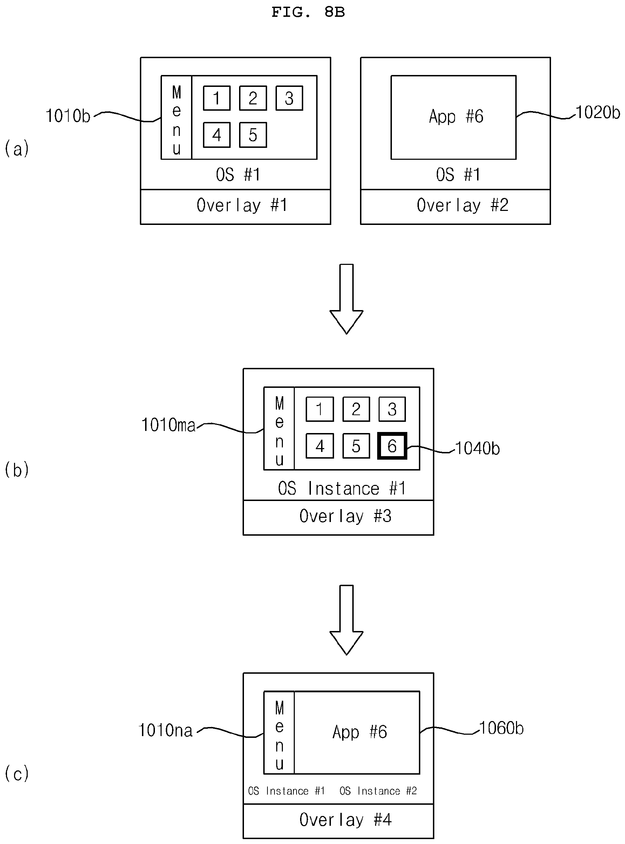

FIG. 8B is a diagram illustrating an example of simultaneously displaying menus and a plurality of application items based on a homogeneous operating system.

Referring to the drawing, the signal processing device 170 may generate each of the first overlay #1 and the second overlay #2 based on the first operating system OSh.

In the drawing, an example is shown in which the first overlay #1 includes a menu 1010b and a plurality of application items, and the second overlay #2 includes a first application screen 1020b.

Meanwhile, the signal processing device 170 may apply alpha blending to a partial area of the first overlay #1, and may generate the third overlay #3 including an application item 1040b and may display the third overlay #3 in the alpha-blended area on the display 180b.

In the drawing, an example is shown in which the overlay #3 includes an application list 1010ma including the menu 1010, a plurality of application items, and the first application item 1040. Accordingly, the signal processing device 170 may simultaneously display the application items based on the homogeneous operating system.

While the application items based on the homogeneous operating system are simultaneously displayed, if the first application item 140 is selected, the signal processing device 170 may apply alpha blending to a partial area of the first overlay #1, and may output the fourth overlay #4 including a first application screen 1060b to the alpha-blended area. Accordingly, the signal processing device 170 may simultaneously display the overlays based on the homogeneous operating system.

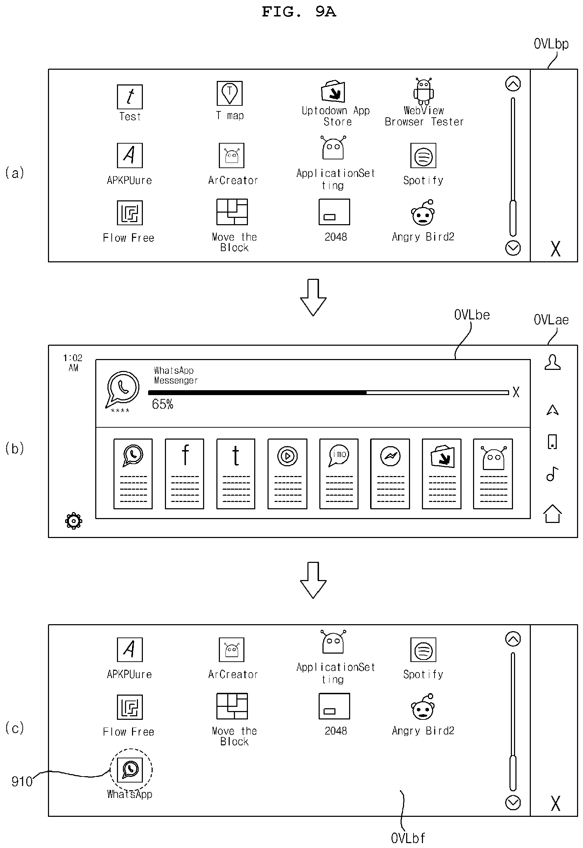

While the signal processing device 170 outputs a first overlay OVLbp including a plurality of application items based on the first operating system OSh, if a first application item based on the second operating system OSg is selected from among the plurality of application items, the signal processing device 170 may be configured to display a second overlay OVLbe including the first application item based on the second operating system OSg to be overlapped on at least a portion of a first overlay OVLae, which will be described below with reference to FIG. 9A.

FIG. 9A is a diagram illustrating an example in which by screen switching from the first overlay OVLbp including the plurality of application items based on the first operating system OSh, the second overlay OVLbe is displayed to be overlapped on at least a portion of the first overlay OVLae.

Referring to the drawing, the first operating system OSh may be QNX OS or Linux OS, and the first overlay OVLbp may include a plurality of application items based on the QNX OS or the Linux OS.

If a first application item is selected from among the plurality of application items based on the QNX OS or Linux OS, the signal processing device 170 may generate the second overlay OVLbe including a screen of a first application executing on the second operating system OSg, and may be configured to display the generated second overlay OVLbe to be overlapped on at least a central area as a partial area of the first overlay OVLae. Accordingly, the signal processing device 170 may simultaneously display the overlays based on the heterogeneous operating systems.

In this case, the second operating system OSg may be Android OS, web OS, or iOS.

The first application item may correspond to an application store item, and the screen of the first application may correspond to a messenger application screen.

While the second overlay OVLbe is displayed on the display 180b to be overlapped on the central area as a partial area of the first overlay OVLae, if a messenger application item is selected, the signal processing device 170 may receive and install the messenger application.

Upon completing installation, the signal processing device 170 may display an overlay OVLbf including a plurality of application items based on the first operating system OSh, and having the messenger application item 910 added thereto, as illustrated in (c) of FG. 9A.

Meanwhile, the signal processing device 170 may be configured to add preview information or a message based on the second operating system OSg in a portion of the first overlay based on the first operating system OSh; and when the preview information or the message is selected, the signal processing device 170 may display the second overlay including a screen corresponding to the preview information or the message.

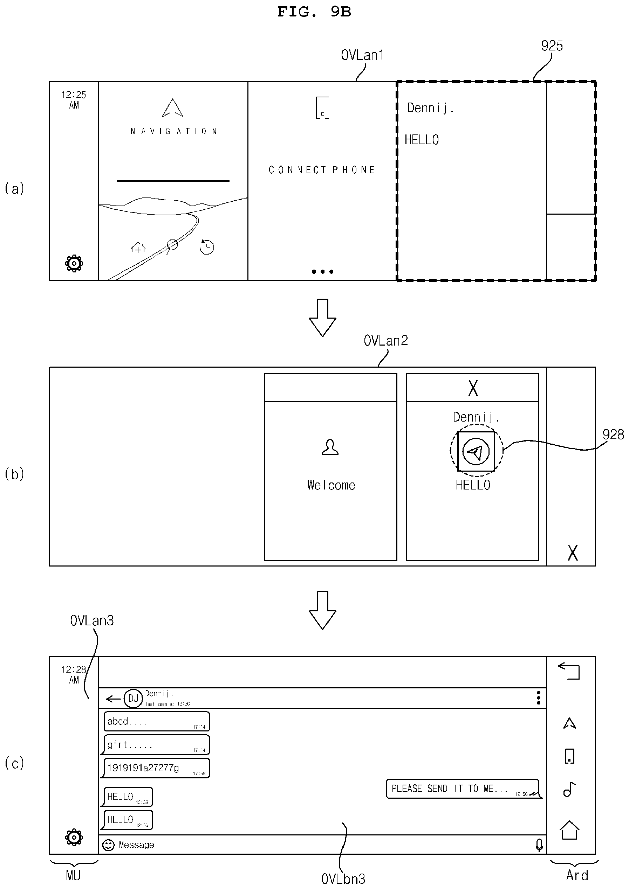

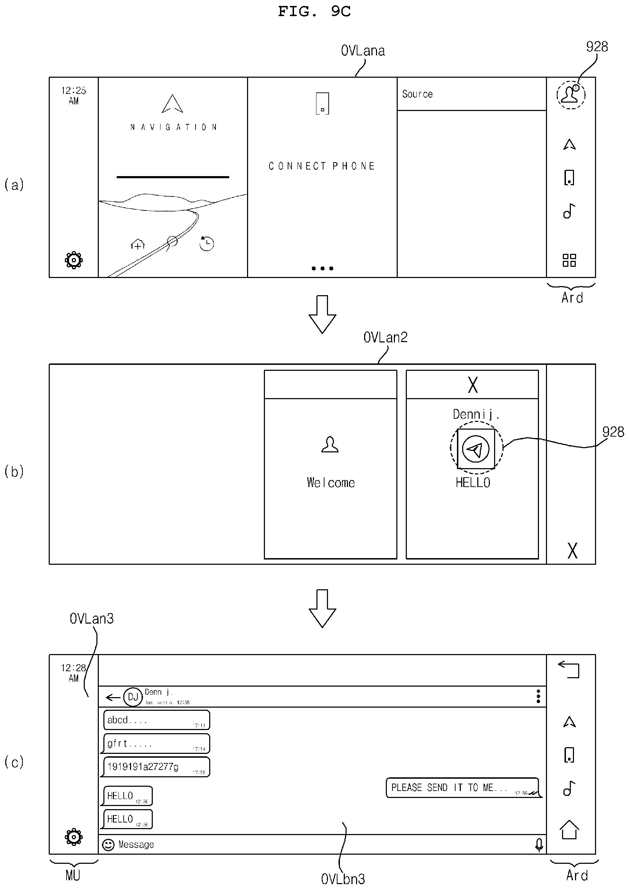

Meanwhile, the signal processing device 170 may be configured to display a second overlay OVLb including the screen corresponding to the preview information or the message based on the second operating system OSg to be overlapped on at least a portion of the first overlay OVLa, which will be described below with reference to FIGS. 9B and 9C.

FIG. 9B is a diagram illustrating an example of displaying a message in a partial area 925 of the first overlay OVLan1 based on the first operating system OSh.

In this case, the message is a message based on the second operating system OSg and may be displayed to be overlapped on the partial area 925 of the first overlay OVLan1 based on the first operating system OSh.

If the message displayed in the partial area 925 is selected, the signal processing device 170 may display an application item 928, corresponding to the message, in the partial area of a first overlay OVLan2 based on the first operating system OSh, as illustrated in (b) of FIG. 9B. Accordingly, the signal processing device 170 may display the overlays based on the heterogeneous operating systems.

Meanwhile, the application item 928 corresponding to the message may be an application item based on the second operating system OSg.

Meanwhile, when the application item 928 is selected, the signal processing device 170 may display a message application screen OVLbn3 based on the second operating system OSg in a partial area of a first overlay OVLan3 based on the first operating system OSh, as illustrated in (c) of FIG. 9B.

In the drawing, an example is shown in which the first menu area MU based on the first operating system OSh is displayed on the left side of the message application screen OVLbn3, and a second menu area Ard based on the first operating system OSh is displayed on the right side of the message application screen OVLbn3. Accordingly, the signal processing device 170 may display the overlays based on the heterogeneous operating systems.

Similarly to FIG. 9B, FIG. 9C illustrates an example of displaying a message preview item 928 in a partial area Ard of the first overlay OVLan1 based on the first operating system OSh.

When the message preview item 928 is selected, the signal processing device 170 may display an application item 928 corresponding to the message in a partial area of the first overlay OVLan2 based on the first operating system OSh, as illustrated in (b) of FIG. 9C. Accordingly, the signal processing device 170 may display the overlays based on the heterogeneous operating systems.

Meanwhile, the application item 928 corresponding to the message may be an application item based on the second operating system OSg.

Meanwhile, when the application item 928 is selected, the signal processing device 170 may display the message application screen OVLbn3 based on the second operating system OSg in the partial area of the first overlay OVLan3 based on the first operating system OSh, as illustrated in (c) of FIG. 9C.

In the drawing, an example is shown in which the first menu area MU based on the first operating system OSh is displayed on the left side of the message application screen OVLbn3, and a second menu area Ard based on the first operating system OSh is displayed on the right side of the message application screen OVLbn3. Accordingly, the signal processing device 170 may display the overlays based on the heterogeneous operating systems.

As is apparent from the foregoing description, according to an embodiment of the present disclosure, a vehicle display apparatus includes a display located in a vehicle, and a signal processing device configured to output an image signal to the display, wherein while outputting a first overlay based on a first operating system, the signal processing device is configured to display a second overlay based on a second operating system to be overlapped on at least a partial area of the first overlay. Accordingly, the signal processing device may simultaneously display the overlays based on the heterogeneous operating systems. In addition, the signal processing device may seamlessly display the overlays based on the heterogeneous operating systems.

Meanwhile, the signal processing device may perform blending on at least the partial area of the first overlay, and may be configured to display the second overlay to be overlapped on the blended area. Accordingly, the signal processing device may simultaneously display the overlays based on the heterogeneous operating systems.

Meanwhile, the signal processing device may execute a hypervisor and may generate the first overlay based on the first operating system on the hypervisor; may generate the second overlay based on the second operating system on the hypervisor; and may be configured to display the second overlay to be overlapped on at least the partial area of the first overlay. Accordingly, the signal processing device may simultaneously display the overlays based on the heterogeneous operating systems.

Meanwhile, the signal processing device may include a processor to execute a hypervisor, wherein the processor may generate the first overlay based on the first operating system on the hypervisor; may generate the second overlay based on the second operating system on the hypervisor; and may be configured to display the second overlay to be overlapped on at least the partial area of the first overlay. Accordingly, the signal processing device may simultaneously display the overlays based on the heterogeneous operating systems.

Meanwhile, while outputting a plurality of first overlays based on the first operating system, the signal processing device may be configured to display the second overlay based on the second operating system to be overlapped on any one of the plurality of first overlays. Accordingly, the signal processing device may simultaneously display the overlays based on the heterogeneous operating systems.

Meanwhile, the first overlay may include at least one application item based on the first operating system; and the second overlay may include at least one application item based on the second operating system. Accordingly, the signal processing device may simultaneously display the applications items based on the heterogeneous operating systems.

Meanwhile, the first overlay may include a menu and a plurality of application items based on the first operating system; and the second overlay may include at least one application item based on the second operating system. Accordingly, the signal processing device may simultaneously display the plurality of application items based on the heterogeneous operating systems.

Meanwhile, in response to a first application item based on the second operating system being selected, the signal processing device may output an overlay including a screen of the first application based on the second operating system. Accordingly, the signal processing device may rapidly display the overlays based on the heterogeneous operating systems.

Meanwhile, while the signal processing device outputs the first overlay based on the first operating system, in response to an application view item in the first overlay being selected, the signal processing device may be configured to display a second overlay including a plurality of application items based on the second operating system to be overlapped on a partial area of the first overlay. Accordingly, the signal processing device may simultaneously display the overlays based on the heterogeneous operating systems.

Meanwhile, in response to a first application item being selected from among the plurality of application items, the signal processing device may be configured to display an overlay related to the first application to be overlapped on the partial area of the first overlay. Accordingly, the signal processing device may rapidly display the overlays based on the heterogeneous operating systems.

Meanwhile, while the signal processing device outputs the first overlay based on the first operating system: in response to an application view item in the first overlay being selected, the signal processing device may be configured to display a second overlay including a plurality of application items based on the second operating system to be overlapped on a partial area of the first overlay; and in response to a first application item being selected from among the plurality of application items, the signal processing device may be configured to display an overlay related to the first application to be overlapped on the partial area of the first overlay. Accordingly, the signal processing device may rapidly display the overlays based on the heterogeneous operating systems.

Meanwhile, while the signal processing device outputs a first overlay including a plurality of application items based on the first operating system, in response to a first application item based on the second operating system being selected from among the plurality of application items, the signal processing device may be configured to display a second overlay including a screen of the first application based on the second operating system to be overlapped on the partial area of the first overlay. Accordingly, the signal processing device may simultaneously display the overlays based on the heterogeneous operating systems.

Meanwhile, the signal processing device may be configured to add preview information or a message based on the second operating system in the partial area of the first overlay based on the first operating system, wherein in response to the preview information or the message being selected, the signal processing device may display the second overlay including a screen corresponding to the preview information or the message. Accordingly, the signal processing device may rapidly display the overlays based on the heterogeneous operating systems.

Meanwhile, the signal processing device may be configured to display the second overlay including the screen corresponding to the preview information or the message based on the second operating system to be overlapped on at least the partial area of the first overlay. Accordingly, the signal processing device may rapidly display the overlays based on the heterogeneous operating systems.

Meanwhile, the signal processing device may include a processor configured to perform signal processing for the display, wherein on the hypervisor in the processor, the processor may execute a server virtual machine on the first operating system and a guest virtual machine executed for the display on the second operating system, thereby stably executing the virtual machines based on the heterogeneous operating systems.

Meanwhile, the server virtual machine may output a first overlay based on the first operating system; and the guest virtual machine may be configured to display a second overlay to be overlapped on at least a partial area of the first overlay, thereby simultaneously displaying the overlays based on the heterogeneous operating systems.

Meanwhile, the processor may transmit the first overlay, output from the server virtual machine, to the guest virtual machine through an interface, thereby simultaneously displaying the overlays based on the heterogeneous operating systems.

Meanwhile, the processor may execute a hypervisor and may transmit the first overlay, output from the server virtual machine, to the guest virtual machine through a shared memory in the hypervisor, thereby efficiently transmitting or sharing data by executing the virtual machines on the hypervisor.

A signal processing device according to an embodiment of the present disclosure includes a processor configured to output an image signal to a display located in a vehicle, wherein while outputting a first overlay based on a first operating system, the signal processing device is configured to display a second overlay based on a second operating system to be overlapped on at least a partial area of the first overlay. Accordingly, the signal processing device may simultaneously display the overlays based on the heterogeneous operating systems. In addition, the signal processing device may seamlessly display the overlays based on the heterogeneous operating systems.

Meanwhile, the processor may execute a hypervisor and may generate the first overlay based on the first operating system on the hypervisor; may generate the second overlay based on the second operating system on the hypervisor; and may be configured to display the second overlay to be overlapped on at least the partial area of the first overlay, thereby simultaneously displaying the overlays based on the heterogeneous operating systems.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A vehicle display apparatus (100) comprising:
a display (180b) located in a vehicle (200); and
a signal processing device (170) configured to output an image signal to the display,
wherein while outputting a first overlay based on a first operating system, the signal processing device is configured to display a second overlay based on a second operating system to be overlapped on at least a partial area of the first overlay.

2. The vehicle display apparatus of claim 1, wherein the signal processing device (170) is configured to perform blending on at least the partial area of the first overlay, and to display the second overlay to be overlapped on the blended area.

3. The vehicle display apparatus of any one of the preceding claims, wherein the signal processing device is configured to:
execute a hypervisor (505) and generate the first overlay based on the first operating system on the hypervisor;
generate the second overlay based on the second operating system on the hypervisor; and
display the second overlay to be overlapped on at least the partial area of the first overlay.

4. The vehicle display apparatus of any one of the preceding claims, wherein the signal processing device comprises a processor (175) to execute a hypervisor (505),
wherein the processor (175) is configured to:
generate the first overlay based on the first operating system on the hypervisor;
generate the second overlay based on the second operating system on the hypervisor; and
display the second overlay to be overlapped on at least the partial area of the first overlay.

5. The vehicle display apparatus of any one of the preceding claims, wherein while outputting a plurality of first overlays based on the first operating system, the signal processing device (170) is configured to display the second overlay based on the second operating system to be overlapped on any one of the plurality of first overlays.

6. The vehicle display apparatus of any one of the preceding claims, wherein:
the first overlay comprises at least one application item based on the first operating system; and
the second overlay comprises at least one application item based on the second operating system.

7. The vehicle display apparatus of any one of the preceding claims, wherein:
the first overlay comprises a menu and a plurality of application items based on the first operating system; and
the second overlay comprises at least one application item based on the second operating system, wherein in response to a first application item based on the second operating system being selected, the signal processing device (170) outputs an overlay including a screen of the first application based on the second operating system.

8. The vehicle display apparatus of any one of the preceding claims, wherein while the signal processing device (170) outputs the first overlay based on the first operating system, in response to an application view item in the first overlay being selected, the signal processing device (170) is configured to display a second overlay including a plurality of application items based on the second operating system to be overlapped on a partial area of the first overlay, wherein in response to a first application item being selected from among the plurality of application items, the signal processing device (170) is configured to display an overlay related to the first application to be overlapped on the partial area of the first overlay.

9. The vehicle display apparatus of any one of the preceding claims, wherein while the signal processing device (170) outputs the first overlay based on the first operating system:
in response to an application view item in the first overlay being selected, the signal processing device (170) is configured to display a second overlay including a plurality of application items based on the second operating system to be overlapped on a partial area of the first overlay; and
in response to a first application item being selected from among the plurality of application items, the signal processing device (170) is configured to display an overlay related to the first application to be overlapped on the partial area of the first overlay.

10. The vehicle display apparatus of any one of the preceding claims, wherein while the signal processing device (170) outputs a first overlay including a plurality of application items based on the first operating system, in response to a first application item based on the second operating system being selected from among the plurality of application items, the signal processing device (170) is configured to display a second overlay including a screen of the first application based on the second operating system to be overlapped on the partial area of the first overlay.

11. The vehicle display apparatus of any one of the preceding claims, wherein the signal processing device (170) is configured to add preview information or a message based on the second operating system in the partial area of the first overlay based on the first operating system,
wherein in response to the preview information or the message being selected, the signal processing device (170) is configured to display the second overlay including a screen corresponding to the preview information or the message.

12. The vehicle display apparatus of claim 11, wherein the signal processing device (170) is configured to display the second overlay including the screen corresponding to the preview information or the message based on the second operating system to be overlapped on at least the partial area of the first overlay.

13. The vehicle display apparatus of any one of the preceding claims, wherein the signal processing device (170) comprises a processor (175) configured to perform signal processing for the display,
wherein on the hypervisor in the processor, the processor (175) executes a server virtual machine (520) on the first operating system and a guest virtual machine (540) executed for the display on the second operating system, wherein:
the server virtual machine (520) outputs a first overlay based on the first operating system; and
the guest virtual machine (540) is configured to display a second overlay to be overlapped on at least a partial area of the first overlay.

14. The vehicle display apparatus of claim 13, wherein the processor (175) transmits the first overlay, output from the server virtual machine (520), to the guest virtual machine (540) through an interface.

15. The vehicle display apparatus of claim 13, wherein the processor (175) executes a hypervisor (505) and transmits the first overlay, output from the server virtual machine (520), to the guest virtual machine through a shared memory (508) in the hypervisor (505).
